(19) Europäisches Patentamt
European Patent Office
Office européen des brevets

(11) EP 1 477 457 B1

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(51) Int Cl.:
*C01B 33/149* (2006.01) *C01B 33/193* (2006.01)
*C09D 7/00* (2006.01) *C09C 3/12* (2006.01)

(21) Anmeldenummer: **04101586.8**

(22) Anmeldetag: **16.04.2004**

# (54) Oberflächenmodifizierte Fällungskieselsäuren

Surface modified precipitated silica

Dioxyde de silicium précipité modifié superficiellement

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.05.2003 DE 10321575**
**12.03.2004 DE 102004012090**

(43) Veröffentlichungstag der Anmeldung:
**17.11.2004 Patentblatt 2004/47**

(73) Patentinhaber: **Degussa GmbH**
**40474 Düsseldorf (DE)**

(72) Erfinder:
- **Christian, Hans-Dieter**
**63755, Alzenau (DE)**
- **Schubert, Jürgen, Dr.**
**63571, Gelnhausen (DE)**
- **Schmeier, Uwe**
**63594, Hasselroth (DE)**

(56) Entgegenhaltungen:
**EP-A- 1 281 733** **DE-A- 3 627 782**
**DE-A- 3 815 670** **DE-A- 19 816 362**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 477 457 B1

## Beschreibung

Die Erfindung betrifft die Verwendung oberflächenmodifizierter Fällungskieselsäuren, deren Oberfläche durch Behandlung mit einem Polymeren dahingehend modifiziert wurde, dass sie besonders gut für den Einsatz als Mattierungsmittel geeignet sind, um die Transmission eines Lackes zu Verbessern, sowie ein Verfahren zur Herstellung der Kieselsäuren.

Die Oberflächenmodifizierung von Fällungskieselsäuren ist lange bekannt und dient zur Herstellung von funktionsverbessernden Materialien für Siliconkautschuke, Inkjet-Anwendungen oder Lacken (als Mattierungsmittel).

So beschreibt EP 0 922 671 die Herstellung einer hydrophoben Fällungskieselsäure, wobei eine konventionelle, getrocknete Fällungskieselsäure mit einer Polyethylenwachsemulsion versetzt und anschließend in einer Sichtermühle oder Fließbettgegenstrahlmühle vermahlen wird.

DE 25 13 608 beschreibt ein Verfahren zur Hydrophobierung feinteiliger Kieselsäuren durch Behandlung der trockenen Kieselsäure mit Organosilanen in einem fluidisierten Zustand bei Temperaturen von 200 bis 300 °C.

Zur Vereinfachung des Hydrophobierungsverfahrens wird in EP 0 341 383 vorgeschlagen, in eine Suspension von Fällungskieselsäuren Siliconölemulsionen einzutragen.

Ein ähnliches Verfahren ist durch DE 24 35 860 beschrieben, bei dem eine Fällungskieselsäuresuspension mit gegebenenfalls vorkondensierten Organohalogensilanen umgesetzt wird. Nach Filtration des Feststoffs wird dieser bei Temperaturen von 300 bis 400 °C getempert und anschließend vermahlen.

Fällungskieselsäuren werden häufig zur Mattierung von Lackoberflächen verwendet. Eine so mattierte Lackschicht sollte unter verschiedenen Beobachtungswinkeln einen möglichst geringen Glanz aufweisen. Da hydrophile Fällungskieselsäuren in Lacken zu starker Sedimentation neigen können und damit nur noch schwer oder gar nicht mehr aufrührbar sind, werden häufig mit Wachs belegte Fällungskieselsäuren als Mattierungsmittel eingesetzt. Durch die Wachsbelegung der Kieselsäureoberfläche wird das Sedimentationsverhalten wesentlich verbessert. Das Mattierungsmittel sedimentiert nicht oder nur so gering, dass es ohne großen Energieaufwand wieder aufgerührt werden kann.

Bei der Verwendung von Klarlacken ist es wünschenswert, die Transparenz des Lackes durch die Einarbeitung des Mattierungsmittels nicht zu beeinflussen.

Aufgabe der vorliegenden Erfindung war es daher, oberflächenmodifizierte Kieselsäuren zur Verfügung zu stellen, welche beim Einsatz als Mattierungsmittel in Klarlacken zu verbesserten Eigenschaften der Lacke, führen. Ein Verfahren zur Herstellung der oberflächenmodifizierten Kieselsäuren soll ebenfalls bereitgestellt werden.

Überraschend hat sich gezeigt, dass die erfindungsgemäßen Kieselsäuren die Transparenz von Lacken verbessern, wobei sie mindestens gleich gute Sedimentationseigenschaften wie Kieselsäuren, die mit Polyethylenwachs (PE-Wachs) belegt sind, besitzen. Somit weisen sie Vorteile gegenüber mit Wachsen belegten Mattierungsmitteln, welche häufig eine Trübung des Klarlacks verursachen, auf.

Es wurde herausgefunden, dass Fällungskieselsäuren durch Beschichtung mit bestimmten Polymeren derart modifiziert werden können, dass Lacke, mit einem Brechungsindex im Bereich von 1.4000 bis 1.5000, in die die erfindungsgemäßen Fällungskieselsäuren eingearbeitet wurden, eine hervorragende Transparenz aufweisen. Im Vergleich zu Lacken, die herkömmliche, mit PE-Wachs belegte Kieselsäuren als Mattierungsmittel enthalten, und einen Brechungsindex im Bereich von 1.4000 bis 1.5000 aufweisen, zeigen identische Lacke, die die erfindungsgemäßen Kieselsäuren als Mattierungsmittel enthalten, eine stark verbesserte Transparenz, auch in flüssiger Form, wobei die Sedimentationseigenschaften ebenfalls hervorragend sind. Mit herkömmlichen Mattierungsmitteln mattierte Klarlacke sind in flüssiger Form im allgemeinen trübe, wogegen die mit den erfindungsgemäßen Fällungskieselsäuren mattiert Klarlacke, auch in flüssiger Form klar und transparent sind.

Gegenstand der vorliegenden Erfindung ist daher die Verwendung von Fällungskieselsäuren, die folgende physikalisch-chemischen Eigenschaften, d50 = 1 - 50 μm, DBP = 100 - 600 g/100g und C-Gehalt 1 - 20 %, aufweisen und deren Oberfläche mit einem Polyorganosiloxan und/oder einem modifizierten Polyorganosiloxan und/oder einem Polyalkoxysiloxan derart modifiziert wurden, dass die modifizierten Fällungskieselsäuren die Transmission eines Lackes mit einem Brechungsindex von $n_D20$ = 1.4492, enthaltend 5 Gew.-% dieser modifizierten Fällungskieselsäuren, im Vergleich zu einem identischen Lack enthaltend 5 Gew. % einer mit einem Polyethylenwachs behandelten Referenz-Fällungskieselsäure, um mindestens 20 % verbessern, um die Transmission eines Lackes zu verbessern.

Gegenstand der vorliegenden Erfindung ist zudem ein Verfahren zur Herstellung derart oberflächenmodifizierter Fällungskieselsäuren, durch

a) Ausfällen einer Alkalisilikatlösung mit einem Säuerungsmittel unter schwach sauren bis alkalischen Bedingungen,
b) weitere Zugabe eines Säuerungsmittels zur Einstellung eines pH-Werts von 7 bis 2 unter Erhalt einer Kieselsäurensuspension,
c) Abfiltrieren des ausgefällten Feststoffs und
d) Trocknung des Feststoffs mittels Langzeittrocknung, z.B. Drehrohrtrockner oder Tellertrockner, oder mittels Kurzzeittrocknung, z.B. Sprühtrockner, Spinflashtrockner so, dass das Produkt eine Restfeuchte von kleiner 10 % aufweist,
dadurch gekennzeichnet,
dass in Schritt
e) die gefällte Kieselsäure mit einem Polyorganosiloxan und/oder einem modifizierten Polyorganosiloxan und/oder einem Polyalkoxysiloxan behandelt wird, wobei die Menge und die Art des Polymers so gewählt wird, dass die modifizierte Fällungskieselsäure die Transmission eines Klarlacks, mit einem Brechungsindex von $n_D20$ = 1.4492, enthaltend 5 Gew. % dieser modifizierten Referenz-Fällungskieselsäure, im Vergleich zu einem identischen Lack enthaltend 5 Gew. % einer mit einem Polyethylenwachs behandelten Fällungskieselsäure, um mindestens 20 % verbessert.

Bei den erfindungsgemäßen oberflächenmodifizierten Kieselsäuren handelt es sich um Fällungskieselsäuren, die mit einem Polyorganosiloxan und/oder einem modifizierten Polyorganosiloxan und/oder einem Polyalkoxysiloxan beschichtet wurden und dadurch die Transmission eines Klarlacks, mit einem Brechungsindex von $n_D20$ = 1.4492, enthaltend 5 Gew. % dieser modifizierten Fällungskieselsäure, im Vergleich zu einem identischen Lack enthaltend 5 Gew. % einer mit einem Polyethylenwachs behandelten Referenz-Fällungskieselsäure um mindestens 20 % verbessern. Bevorzugt wird die Transmission um mindestens 25 %, insbesondere 30 % verbessert. Bei der mit Polyethylenwachs behandelten Referenz-Kieselsäure handelt es sich bevorzugt um ACEMATT OK 412, ein Handelsprodukt der Firma Degussa, mit einer Spezifikation gemäß Produktinformation von 12/02, welche hiermit ausdrücklich in den Inhalt der Beschreibung der vorliegenden Erfindung aufgenommen wird. Als Referenz-Fällungskieselsäuren können auch Fällungskieselsäuren, die die gleiche unbehandelte Kieselsäure aufweisen und mit einem Polyethylenwachs beschichtet sind, verwendet werden.

Gemäß der Produktinformation 12/02 weist ACEMATT® OK 412 folgende PC-Daten auf:

| Merkmale und Prüfmethoden | Einheiten | ACEMATT® OK 412 |
|---|---|---|
| Trocknungsverlust 2 h bei 105 °C in Anl. an DIN EN ISO 787-2 | % | 6 |
| Glühverlust 1) 2 h bei 1000 °C in Anl. an DIN EN ISO 3262-1 | % | 13 |
| pH-Wert 5%ig in Wasser in Anl. an DIN EN ISO 787-0 | -- | 6 |
| Sulfat-Gehalt als $SO_4$ IR spektroskopisch Degussa Methode | % | 1 |
| Teilchengröße Mittelwert (TEM) d50-Wert (Laserbeugung) | µm | 3<br>6.0 |
| Oberflächenbehandlung | | organisch |
| Stampfdichte nicht gesiebt in An1. an DIN EN ISO 787-11 | g/l | 130 |
| Dichte in Anl. an DIN EN ISO 787-10 | $g/cm^3$ | 1.9 |
| Ölzahl in Anl. an DIN EN ISO 787-5 | g/100 g | 220 |
| $SiO_2$-Gehalt 2) in Anl. an DIN EM ISO 3262-19 | % | 98 |
| 1) bezogen auf getrocknete Substanz<br>2) bezogen auf geglühte Substanz | | |

Die erfindungsgemäßen Kieselsäuren werden zudem durch folgende physikalisch-chemischen Daten charakterisiert:

| | |
|---|---|
| Partikelverteilung d50: | 1 - 40 µm, 1 - 30 µm, 2 - 20 µm und 3 - 15 µm |
| Ölabsorption DBP: | 150 - 500 g/100g, 200 - 450 g/100g und 250 - 400 g/100g |
| C-Gehalt: | 1 - 10 % und 2 - 8 % |
| Searszahl $V_2$: | < 25 ml/5 g |

Bei den modifizierten Polyorganosiloxanen handelt es sich insbesondere um polyethermodifizierte und Acrylat- bzw. polyacrylatmodifizierte Polyorganosiloxane.

In einer bevorzugten Ausführungsform der vorliegenden Erfindung werden Polyorganosiloxane mit folgender allgemeiner Struktur verwendet:

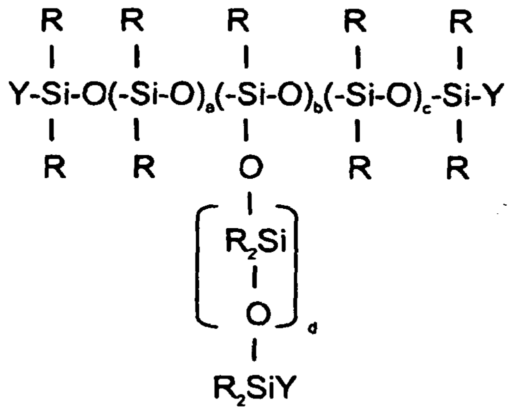

wobei

Y = -OH, -OR oder
Y = $H_5C_2$-O-$(C_2H_4O)_m$-, $H_7C_3$-O-$(C_3H_6O)_m$- oder

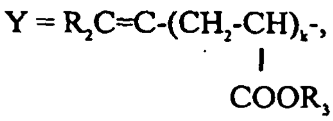

R = -Alkyl insbesondere Methyl oder Ethyl,
$R_2$ = Alkyl,
$R_3$ = Alkyl,
a = 0 - 100, b = 0 - 100, c = 0 - 100, d = 0 - 100,
m = 0 - 100 und k = 0 - 100 ist.

In einer weiteren bevorzugten Ausführungsform der vorliegenden Erfindung werden Polyorganosiloxan mit folgender allgemeiner Struktur verwendet:

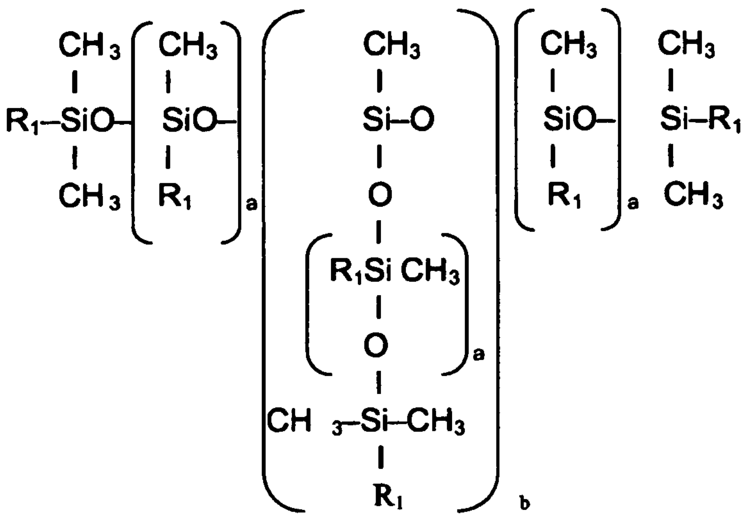

wobei

$R_1$ = ein Methylrest oder

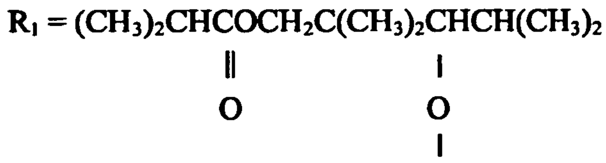

und / oder

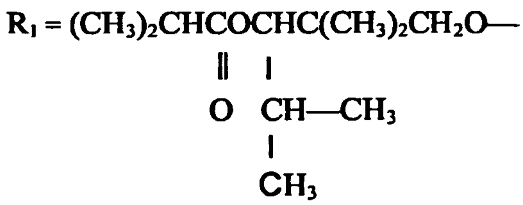

ist und die Summe der Einheiten a = 0 bis 100, die Summe der Einheiten b = 0 bis 15 ist, wobei bei den Resten $R_1$ das Verhältnis von Methyl zu Alkoxyresten kleiner 50 : 1 ist und $b \geq 1$ ist, wenn a = 0 ist und $a \geq 5$ ist, wenn b = 0 ist. Nähere Angaben , insbesondere zur Herstellung dieser Polysiloxane sind der DE 36 27 782 A1 zu entnehmen.

Unter Alkyl-Rest sind gerad- oder verzweigtkettige Alkylrest mit 1 bis 100 C-Atomen, bevorzugt 1 bis 25, besonders bevorzugt 1 bis 10 C-Atomen sowie Cycloalkylreste mit 1 bis 15 C-Atomen zu verstehen. Die Alkylreste können eine oder mehrere Doppel- oder Dreifachbindung enthalten, einzelne Atome können durch Heteroatome wie O, N oder S ersetzt werden.

In den Schritten a) und b) des erfindungsgemäßen Verfahrens wird als wässrige Alkalisilikatlösung bevorzugt Natriumsilikat (Wasserglas) mit einer Dichte von ca. 1.343 kg/l, mit einem Gewichtsanteil von 27,3 % $SiO_2$ und 7,9 % $Na_2O$ eingesetzt. Als Säuerungsmittel kann jede Mineralsäure, insbesondere konzentrierte Schwefelsäure (96 % $H_2SO_4$ oder $CO_2$), eingesetzt werden.

In Schritt a)
werden die Komponenten, wie z. B. in DE31 44 299 beschrieben, unter Rühren miteinander vermengt. Optional kann die Zugabe des Säurungsmittels bzw. von Säurungsmittel gleichzeitig mit Wasserglas in eine Wasser- oder Natriumsilikatvorlage erfolgen. Es ist darauf zu achten, dass die Fällung unter Einhaltung eines schwach sauren bis alkalischen pH-Werts durchgeführt wird. Der pH-Wert beträgt insbesondere 6 - 12. Optional kann die Fällung bei konstantem pH-Wert oder konstanter Alkalizahl durchgeführt werden.

In Schritt b)
wird durch Zugabe eines Säuerungsmittels, hier insbesondere das bereits zur Fällung eingesetzte Säuerungsmittel, ein pH-Wert im sauren oder neutralen Bereich (pH 7 bis 2) eingestellt.

In Schritt c)
wird die in der Suspension enthaltene Kieselsäure gegebenenfalls nach einer Wartezeit von 0 bis 90 Minuten, bevorzugt 15 bis 60 Minuten, abfiltriert und mit deionisiertem Wasser neutral gewaschen.

In Schritt d)
wird der Feststoff mittels Kurzzeittrocknung, z.B. Sprühtrockner, Spinflashtrockner oder Langzeittrocknung z.B. Drehrohrtrockner oder Tellertrockner so getrocknet, dass das Produkt eine Restfeuchte von kleiner 10 % aufweist.

Die Oberflächenmodifikation (Schritt e)) kann zu verschiedenen Zeitpunkten durchgeführt werden.

In einer Ausführungsform 1)
des erfindungsgemäßen Verfahrens wird in die in Schritt b) auf pH 7 - 2 eingestellte Kieselsäuresuspension, in Schritt e) 0.5 - 30 Gew.-% des oberflächenmodifizierenden Polymeren eingetragen. Die Zugabe erfolgt bevorzugt mit einer Dauer zwischen 1 und 30 Minuten, insbesondere 5 bis 15 Minuten, und wird bevorzugt bei der Reaktionstemperatur der Fällung in Schritt a), d. h. insbesondere bei 50 bis 90 °C, bevorzugt 50 - 65 °C, durchgeführt. Anschließend wird die oberflächenmodifizierte Kieselsäure wie für die Schritte c) und d) beschrieben, abfiltriert und getrocknet.

In einer Ausführungsform 2)
der vorliegenden Erfindung wird die gemäß den Schritten a) und b) gefällte Kieselsäure wie für Schritt c) beschrieben abfiltriert, gegebenenfalls mit deionisiertem Wasser gewaschen, danach erneut mit Wasser oder Schwefelsäure oder einem Gemisch aus Wasser und Schwefelsäure resuspendiert und anschließend in Schritt e) 0.5 - 30 Gew.-% des oberflächenmodifizierenden Polymers in die Suspension gegeben und die so erhaltene Suspension in einen Sprühtrockner gesprüht, so dass die Oberflächenmodifizierung während des Trocknungsvorgangs erfolgt. Daneben ist auch die gleichzeitige Eindüsung von Kieselsäuresuspension und Siloxan denkbar. Die Sprühtrocknung erfolgte bei 200 - 500 °C, so, dass das Produkt eine Restfeuchte kleiner 10% aufweist. Der Feststoffgehalt der zu versprühenden Kieselsäuresuspension kann bis zu 25 Gew. % betragen.

In einer Ausführungsform 3)
des erfindungsgemäßen Verfahrens wird die Kieselsäure wie in den Schritten a) - d) beschrieben hergestellt und getrocknet. Anschließend wird die getrocknete Fällungskieselsäure in Schritt e) mit 0.5 - 30 Gew.-% des oberflächenmodifizierenden Polymeren versetzt und innig vermischt. Die Zugabe des Polymeren erfolgt innerhalb von 0 bis 120 min, bevorzugt innerhalb von 0 bis 60 min, bes. bevorzugt innerhalb von 0 bis 30 min. Die Mischung wird 0 - 2 h bei 20 - 150 °C weiter gemischt. Bevorzugt erfolgt die Mischung bei 20 - 100 °C, besonders bevorzugt bei 20-80 °C. Der Mischvorgang wird bevorzugt 0 - 1 h und besonders bevorzugt 0 - 30 min durchgeführt.

Im erfindungsgemäßen Herstellungsverfahren erfolgt die Zugabe der Polymere bevorzugt so, dass während der Reaktion des Polymers mit der Kieselsäure ein Verhältnis von Polymer zu Kieselsäure von 0.5 g : 100 g bis 30 g : 100 g, insbesondere von 2 g : 100 g bis 20 g : 100 g, speziell 3 g : 100 g bis 13 g : 100 g eingestellt wird.

Als oberflächenmodifizierende Polymere können im erfindungsgemäßen Verfahren Polyorganosiloxane oder modifizierte Polyorganosiloxane eingesetzt werden. Bei den modifizierten Polyorganosiloxanen handelt es sich insbesondere um polyethermodifizierte und acrylat- bzw. polyacrylatmodifizierte Polyorganosiloxane. Ferner können Polyalkoxysiloxane eingesetzt werden.

In einer bevorzugten Ausführungsform der vorliegenden Erfindung werden Polyorganosiloxane mit folgender allgemeiner Struktur verwendet:

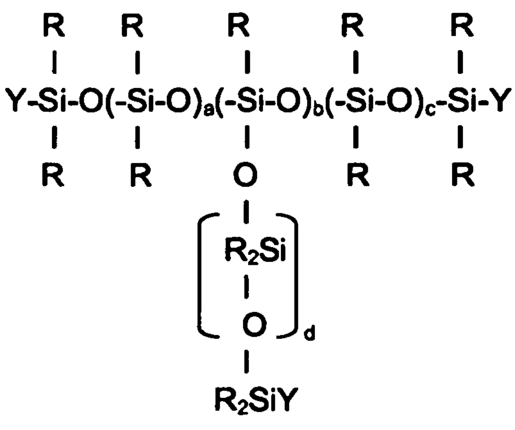

wobei

Y = -OH, -OR oder
Y = $H_5O_2$-O-$(C_2H_4O)_m$-, $H_7C_3$-O-$(C_3H_60)_m$- oder

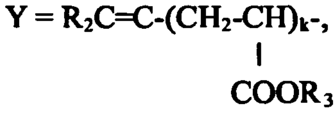

R = Alkyl insbesondere Methyl oder Ethyl,
$R_2$= Alkyl,
$R_3$ = Alkyl,
a = 0 - 100, b = 0 - 100, c = 0 - 100, d = 0 - 100,
m = 0 - 100 und k = 0 - 100 ist.

In einer weiteren bevorzugten Ausführungsform der vorliegenden Erfindung werden Polyorganosiloxan mit folgender allgemeiner Struktur verwendet:

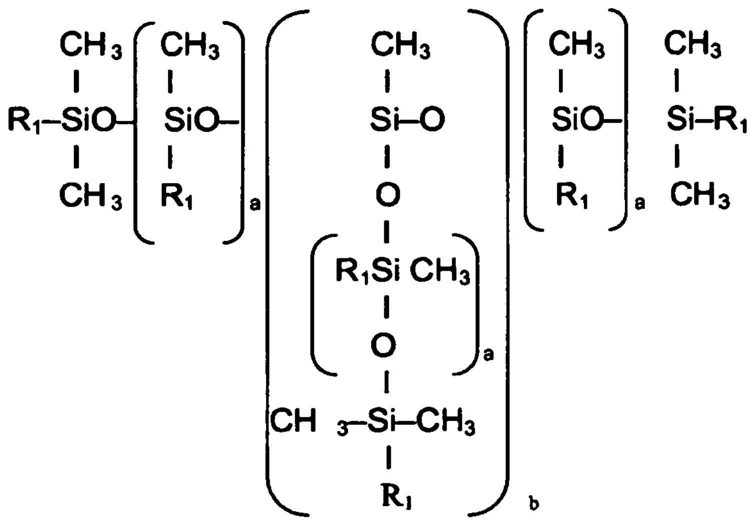

wobei

$R_1$ = ein Methylrest oder

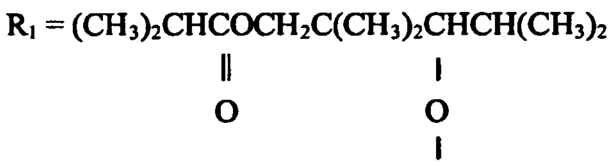

und / oder

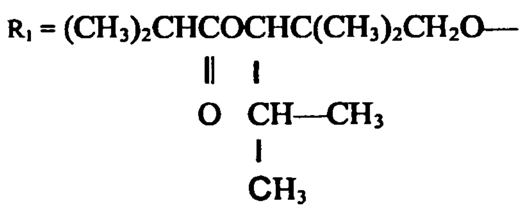

ist und die Summe der Einheiten a = 0 bis 100, die Summe der Einheiten b = 0 bis 15 ist, wobei bei den Resten $R_1$ das Verhältnis von Methyl zu Alkoxyresten kleiner 50 : 1 ist und b ≥ 1 ist, wenn a = 0 ist und a ≥ 5 ist, wenn b = 0 ist. Nähere Angaben , insbesondere zur Herstellung dieser Polysiloxane sind der DE 36 27 782 A1 zu entnehmen. Der Inhalt dieser Patentanmeldung ist ebenfalls Gegenstand der vorliegenden Anmeldung.

Optional kann bei Ausführungsform 1) und 2) noch ein Emulgierhilfsmittel wie z. B. LA-S 687 (Firma TEGO GmbH) zugegeben werden. Dies ist insbesondere bei Organosiliziumverbindungen, die nicht wasserlöslich sind, angezeigt.

Zur Erreichung der gewünschten Partikelverteilung ist es notwendig, dass nach der Trocknung der oberflächenmodifizierten Kieselsäuren in Schritt f) eine Vermahlung bei gleichzeitiger Sichtung durchgeführt wird. Dies Vermahlung kann in handelsüblichen Querstrommühlen (z.B. der Firma Alpine , Firma Netzsch-Condux) durchgeführt werden.

Zur Vermeidung von Oberkom bzw. Stippen ist es zweckmäßig, nach der Trocknung der oberflächenmodifizierten Fällungskieselsäuren oder nach oder während der Vermahlung in Schritt f) Partikel mit einem Durchmesser über 50 µm, bevorzugt über 30 µm, insbesondere über 20 µm abzutrennen. Dies kann je nach Feinheit des Mattierungsmittels z. B. durch ein entsprechendes Sieb oder eine Sichtereinrichtung, die auch in die Mühle integriert sein kann, erfolgen.

Die physikalisch/chemischen Daten der erfindungsgemäßen Fällungskieselsäuren wurden mit den folgenden Methoden bestimmt:

## Bestimmung der Transmission von Lacken

Die Messung der Transmission erfolgte mit einem UV/Vis-Spektralphotometer Specord 200 der Fa. ANALYTIK JENA GmbH in 1 cm Quarzküvetten bei Raumtemperatur gegen Luft als Referenz. Die Spaltbreite und Schrittweite betrug 2 nm.

Dazu wurde ein SH-Lack mit einem Brechungsindex $n_D20$ = 1.4492 und folgender allgemeiner Zusammensetzung:

30.2 Gew.-% Xylol
15.1 Gew.-% Ethoxypropanol
15.1 Gew.-% Ethanol
39.6 Gew.-% Plastopal BT, 60 %ig (Harnstoff-Formaldehydharz, das Urethangruppen enthält und mit kurzkettigen Alkoholen verethert ist, der Firma BASF AG, Ludwigshafen)

vorgelegt und die 2.5 g des jeweiligen Mattierungsmittels (oberflächen-modifizierte Kieselsäure) eingearbeitet. Hierbei wurde das Mattierungsmittel bei Raumtemperatur mit einem Flügelrührer für 10 Min. bei 2000 Umdrehungen/Min, in 50 g Lack SH-Lack dispergiert. Die Dispergierung erfolgte in einem 180 ml PE Mischbecher bei Raumtemperatur. Die Flügeldurchmesser des Rührers betragen 43 mm. Anschließend wurde die frisch zubereitete Dispersion in 1 cm Quarzküvetten gefüllt und UV/Vis-Spektren, in Transmission zwischen 190 und 1100 nm registriert.

## Bestimmung der modifizierten Searszahl von Kieselsäuren

Durch die Titration von Kieselsäuren mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxyl-Gruppen bestimmen. Der Bestimmungsmethode liegen die folgenden chemischen Reaktionen zu Grunde, wobei "Si"-OH eine Silanolgruppe symbolisieren soll:

$$\text{"Si"-OH} + NaCl \Rightarrow \text{"Si"-ONa} + HCl$$

$$HCl + KOH \Rightarrow KCl + H_2O.$$

### Durchführung

10.00 g einer pulverförmigem kugelförmigen oder granulären Kieselsäure mit 5 ± 1 % Feuchte werden 60 Sekunden in der IKA-Universalmühle M 20 (550 W; 20 000 U/min) gemahlen. Gegebenenfalls muß der Feuchtegehalt durch Trocknen bei 105 °C im Trockenschrank oder gleichmäßiges Befeuchten eingestellt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben und man dispergiert mittels Ultra Turrax T 25 (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.
Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l) bzw. Salzsäurelösung (0.1 mol/1) der pH-Wert auf 6.00 eingestellt. Der Verbrauch an KOH- bzw. HCl-Lösung in ml bis pH 6.00 entspricht $V_1'$.

Danach werden 20.0 ml Natriumchlorid-Lösung (250.00 g NaCl p. A. mit entionisiertem Wasser auf 1 l aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.

Anschliessend werden die Volumen $V_1$', bzw. $V_2$' zunächst auf die theoretische Einwaage von 1 g normiert und mit dem Faktor 5 erweitert, woraus sich $V_1$ und die Searszahl $V_2$ in den Einheiten ml/5g ergeben. Die Messungen werden jeweils als Doppelbestimmungen durchgeführt.

## DBP-Aufnahme

Die DBP-Aufnahme (DBP-Zahl), die ein Mass für die Saugfähigkeit der Fällungskieselsäure ist, wird in Anlehnung an die Norm DIN 53601 wie folgt bestimmt:

## Durchführung

12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279 061) des Brabender-Absorptometer "E" gegeben. Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

## Auswertung

Die DBP-Aufnahme wird in g/100 g angegeben und anhand der folgenden Formel aus dem gemessenen DBP-Verbrauch berechnet. Die Dichte von DBP beträgt bei 20 °C typischer Weise 1.047 g/ml.

DBP-Aufnahme in g/100 g = Verbrauch an DBP in ml * Dichte des DBP in g/ml * 100 / 12.5 g

Die DBP-Aufnahme ist für die wasserfreie, getrocknete Kieselsäure definiert. Bei Verwendung von feuchten Fällungskieselsäuren ist der Wert mittels der folgenden Korrekturtabelle zu korrigieren.

Der Korrekturwert entsprechend dem Wassergehalt wird zu dem experimentell bestimmten DBP-Wert addiert; z. B. würde ein Wassergehalt von 5.8 % einen Zuschlag von 33 g/100 g für die DBP-Aufnahme bedeuten.

**Korrekturtabelle für Dibutylphthalataufnahme -wasserfrei-**

| % Wasser | .% Wasser<br>.0 | .2 | .4 | .6 | .8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Feuchte von Kieselsäuren**

Nach dieser Methode werden in Anlehnung an ISO 787-2 die flüchtigen Anteile (im folgenden der Einfachheit halber "Feuchte" genannt) von Kieselsäure nach 2 stündiger Trocknung bei 105 °C bestimmt. Dieser Trocknungsverlust besteht im allgemeinen überwiegend aus Wasserfeuchtigkeit.

**Durchführung**

In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen (Einwaage E). Die Probe wird bei geöffnetem Deckel 2 h bei 105 ± 2 °C in einem Trockenschrank getrocknet. Anschließend wird das Wägeglas verschlossen und in einem Exsikkatorschrank mit Kieselgel als Trocknungsmittel auf Raumtemperatur abgekühlt. Die Auswaage A wird gravimetrisch bestimmt.
Man bestimmt die Feuchte in % gemäß (E in g - A in g) * 100% / E in g.
Die Messung wird als Doppelbestimmung durchgeführt.

**Bestimmung des Glühverlusts :**

2 h bei 1000 °C nach Trocknung, DIN 55 921/3,4, ISO 3262

**Bestimmung des d50**

**Aggregatgrößenverteilung durch Laserbeugung (Coulter)**

**Geräte:**

Laserbeugungsgerät LS 230, Fa. Coulter
Utraschallfinger Bandelin, Typ HD 2200 mit Horn DH 13 G
Kühlbad 80 ml
Eppendorfpipette 5 ml
Zentrifugenglas, Höhe 7 cm, ∅ 3 cm
Petrischale, Höhe 4 cm, ∅ 7 cm
Dewar-Gefäß, Höhe 21 cm, ∅ 4 cm
Digitales Thermometer, Genauigkeit ± 0.1 K
Chemikalien:

Ethanol, p.A., Fa. Merck
Triton X-100, Fa. Merck
Natriumhexametaphosphat, Fa. Baker

**Probenvorbereitung:**

Granulate werden in einen Mörser gegeben und die grobkörnigen Granulatstücke zerdrückt, nicht gemörsert. 1 g ungealterte Kieselsäure (Zeitspanne zur Produktion max. 10 Tage) wird in ein 30ml Rollrandgläschen eingewogen und mit 20 ml Dispersionslösung (20 g Natriumhexametaphosphat auf 1000 ml mit demineralisiertem Wasser aufgefüllt) versetzt. Anschließend wird die Probe in ein Kühlbad, welches die starke Erwärmung der Suspension verhindert, gestellt und 1 min mit Ultraschall behandelt (20 W-Leistung, 80 % Pulse). Je Kieselsäure werden nacheinander drei Dispersionslösungsmuster hergestellt.
Bis die Probenzugabe in das Flüssigkeitsmodul erfolgt, gibt man die Suspension in eine Petrischale mit Magnetrührer, um eventuelle Sedimentation zu verhindern.

**Durchführung:**

Vor Beginn der Messung lässt man das Gerät und das Flüssigkeitsmodul mindestens 30 min warmlaufen und spült das Modul (Menüleiste "Steuerung/Spülen") 10 min. automatisch. In der Steuerleiste der Coultersoftware wählt man über dem Menüpunkt "Messungen" das Dateifenster "Opt. Modell berechnen" aus und legt die Brechungsindizes

fest (Flüssigkeitsbrechungsindex Real = 1.332; Material Brechungsindex Real = 1.46, Imaginär = 0.1).
In dem Dateifenster "Messzyklus" stellt man die Leistung der Pumpgeschwindigkeit auf 26 % und die Ultraschallleistung auf 3 % ein Die Punkte Ultraschall "während der Probenzugabe", "vor jeder Messung" und "während der Messung" sind zu aktivieren.
Zusätzlich wählt man in diesem Dateifenster die folgenden Punkte aus:

Offsetmessung (1x täglich)
Justieren
Hintergrundmessung
Messkonz. einstellen
Probeninfo eingeben
Messinfo eingeben
2 Messungen starten
Autom. Spülen
Mit PIDS Daten

Nach Abschluss der Kalibrierung, erfolgt die Probenzugabe. Man fügt so lange dispergierte Kieselsäure zu, bis eine Lichtabsorption von ca. 45 % erreicht ist und das Gerät *OK* meldet.
Die Messung erfolgt mit dem Frauenhofer Modell, wobei die Standardsoftware des Laserbeugungsgerät LS 230, Fa. Coulter verwendet wurde.
Von jeder Probenzugabe werden drei Doppelbestimmungen von 60 Sekunden durchgeführt. Aus der Rohdatenkurve berechnet die Software auf Basis der Volumenverteilung die Teilchengrößenverteilung.

**Bestimmung des C-Gehalts**

**Geräte:**
C-mat 500 der Fa. Ströhlein Instruments
Analysenwaage
Porzellanschiffchen mit Deckel
Pinzette
Dosierlöffel

**Reagenzien**
Euro-Analysen-Kontrollprobe 077-2 (Fa. Ströhlein Instruments)
Sauerstoff

**Durchführung**

Messung der Kontrollprobe

Zuerst wird die Kontrollprobe gemessen. Dazu werden auf ein ausgeglühtes, abgekühltes Porzellanschiffchen 0.14 - 0.18 g auf einer Analysenwaage eingewogen. Beim Bedienen der Starttaste wird das Gewicht übernommen, da die Waage mit dem C-mat gekoppelt ist. Das Schiffchen muß innerhalb von 30 Sekunden in die Mitte des Verbrennungsrohres geschoben werden. Nach Abschluß der Verbrennung wird der Meßwert in Impulse umgewandelt und vom Rechner ausgewertet. Es werden 2 und mehr Bestimmungen durchgeführt. Eventuell muß der Faktor des Gerätes neu eingestellt werden. Der Faktor wird nach folgender Formel berechnet:

$$\text{Faktor} = \frac{\text{Sollwert} * \text{Einwaage} * 100}{\text{Impulse}}$$

Messung der Kieselsäureproben

Nach der Ermittlung des Faktors werden die Kieselsäureproben gemessen. Dazu werden jeweils 0.04 - 0.05 g der Kieselsäure in ein Porzellanschiffchen eingewogen und das Porzellanschiffchen mit einem Porzellandeckel abgedeckt. Anschließend werden die Kieselsäureproben analog zur Kontrollprobe vermessen. Bei Abweichungen > 0.005% wird eine dritte und ggf. weitere Messungen durchgeführt und der Durchschnitt errechnet.

**Auswertung**

Der Kohlenstoffgehalt wird nach folgender Formel berechnet:

$$\%C = \frac{I * F * 10^{-5}}{E * 1000}$$

Dabei bedeuten:

I = Impulse
F = Faktor
E = Einwaage in g

**Ergebnisangabe**

Das Ergebnis wird in 2 Nachkommastellen in %C abgegeben.

**Anmerkung**

Die Handhabung des "C-mat 500" kann der Bedienungsanleitung der Fa. Ströhlein Instruments entnommen werden.

Die folgenden Beispiele dienen zur Erläuterung der Erfindung und sollen deren Schutzumfang, wie in den Patentansprüchen dargelegt, nicht einschränken.

**Beispiele 1 - 3**

Die Herstellung der Kieselsäure erfolgt analog DE 1767332:
In einem beheizbaren 1201-Fällbehälter mit Rühraggregat werden 801 Wasser vorgelegt und mit 5.5 1 Wasserglas (Dichte = 1.346 g/l, SiO2-Gehalt = 27.3 %, Na2O-Gehalt = 7.9 %) auf Alkalizahl 20 eingestellt. Die Vorlage wird auf 85°C erhitzt. Bei dieser Temperatur wird die gesamte Fällung durchgeführt. Danach werden parallel Wasserglas mit einer Dosiergeschw. von 207 ml/min und Schwefelsäure (50%) mit einer Dosiergeschwindigkeit von 45 ml/min so zudosiert, daß sich die Alkalizahl nicht ändert. Ab der 30. min wird ein Scheraggregat zugeschaltet, das die Fällsuspension während der weiteren Fällung so intensiv schert, daß am Ende der Fällung eine Partikelverteilung von d50 = 7 µm erreicht wird. Nach der 45. min wird die Zudosierung von Wasserglas und Schwefelsäure für 30 min unterbrochen. Danach werden Wasserglas und Schwefelsäure eingeschaltet und mit der gleichen Geschwindigkeit wie oben zudosiert. Nach weiteren 45 min wird die Wasserglaszudosierung abgeschaltet und so lange Schwefelsäure zudosiert, bis ein pH von 3.5 erreicht ist. Danach ist die Fällung beendet.

Anschließend wird die in der folgenden Tabelle genannte Menge an Polyorganosiloxanemulsion (TEGO Foamex 1435, Firma TEGO GmbH) auf einmal zu der Kieselsäurensuspension gegeben und bei erhöhter Temperatur für die Dauer von 30 min nachgerührt. Anschließend wird die so beschichtete Kieselsäure analog DE 17 67 332 abfiltriert, gewaschen, getrocknet, vermahlen und gesichtet.

Tabelle 1 zeigt einen Vergleich dreier nach obigen Verfahren hergestellter, oberflächenmodifizierter Kieselsäuren mit einer unbehandelten Kieselsäure ACEMATT HK 400 (öffentlich frei zugängliches Handelsprodukt der Firma DEGUSSA). Bei den Beispielen 1 - 3 handelt es sich um Kieselsäuren, die mit unterschiedlichen Mengen an Polyorganosiloxan behandelt wurden.

| | Einheit | Vergleichsbeispiel 1 | Beispiel 1 | Beispiel 2 | Beispiel 3 |
|---|---|---|---|---|---|
| Kieselsäure | | ACEMATT HK 400 | ACEMATT HK 400 | ACEMATT HK 400 | ACEMATT HK 400 |
| Hersteller und Vertreiber | | DEGUSSA AG | DEGUSSA AG | DEGUSSA AG | DEGUSSA AG |
| Menge Kieselsäuresuspension | 1 | - | 60 | 60 | 60 |
| Feststoffgehalt | g/l | - | 80 | 80 | 80 |
| Siloxan | | - | Wässrige Emulsion mit 20% Ethoxypolysiloxangehalt | Wässrige Emulsion mit 20% Ethoxypolysiloxangehalt | Wässrige Emulsion mit 20% Ethoxypolysiloxangehalt |
| Menge der zugegebenen Siloxanemulsion | kg | | 1,25 | 2,50 | 5,00 |
| Rührtemp. | °C | - | 60 | 60 | 60 |
| Rührdauer | min | - | 30 | 30 | 30 |
| $d_{50}$ | µm | 7.55 | 6.63 | 7.45 | 8.55 |
| DBP | g/100g | 273 | 288 | 278 | 254 |
| C-Gehalt | % | 0 | 2.1 | 6.3 | 11.1 |
| Searszahl | ml/5g | n. b. | 21.1 | 14 | 10.6 |
| Trockenverlust | % | 4.5 | 4.1 | 3.5 | 2.8 |
| Glühverlust | % | 4.9 | 5.5 | 10.2 | 17.7 |

**Beispiel** 4

Vergleich der erfindungsgemäßen Mattierungsmittel mit einem Mattierungsmittel aus dem Stand der Technik, durch Transmissionsmessungen von Lacken. Dazu wurden drei Lackmischungen hergestellt, wobei jeweils 2.5 g eines Mattierungsmittels in 50 g eines SH-Lacks (Brechungsindex $n_D20$ = 1.4492) der folgenden allgemeinen Zusammensetzung :

30.2 Gew.-% Xylol
15.1 Gew.-% Ethoxypropanol
15.1 Gew.-% Ethanol
39.6 Gew.-% Plastopal BT, 60 %ig (Harnstoff-Formaldehydharz, das Urethangruppen enthält und mit kurzkettigen Alkoholen verethert ist, der Firma BASF AG, Ludwigshafen)

eingearbeitet werden.

Probenvorbereitung:

Zur Messung wurden 2.5 g Mattierungsmittel bei Raumtemperatur mit einem Flügelrührer für 10 Min. bei 2000 Umdrehungen/Min. in 50 g Lack SH-Lack dispergiert. Die Dispergierung erfolgt in einem 180 ml PE Mischbecher bei Raumtemperatur. Die Flügeldurchmesser des Rührers betragen 43 mm.

Messung:

Von den frisch zubereiteten Dispersionen werden UV/Vis-Spektren in Transmission zwischen 190 und 1100 nm registriert. Die Messungen erfolgen an einem UV/Vis-Spektralphotometer Specord 200 der Fa. Analytik Jena GmbH in 1 cm Quarzküvetten bei Raumtemperatur gegen Luft als Referenz. Die Spaltbreite und Schrittweite beträgt 2 nm.
Nach obiger Vorschrift wurden die Transmissionswerte von Lacken enthaltend ein Mattierungsmittel gemäß Beispiel 2 oder 3 oder ein mit PE-Wachs beschichtetes Mattierungsmittel ACEMATT OK 412, gemessen. Bei ACEMATT OK 412 handelt es sich um ein öffentlich frei zugängliches Handelsprodukt der Firma DEGUSSA AG, entsprechend der Produktinformation 12/02. Ferner wurden die Transmissionswerte des reinen Lackes ohne Mattierungsmittel gemessen.

Folgende Transmissionswerte wurden erhalten:

| **Probenbezeichnung** | **Transmission in % bei 600 nm** | **Transmission in % bei 700 nm** | **C-Gehalt in %** |
|---|---|---|---|
| Unmattierter SH-Lack | 92.9 | 93.0 | n. b. |
| Vergleichsbeispiel 2, ACEMATTOK412 | 35.1 | 39.5 | 5.2 |
| Beispiel 2 | 76.8 | 77.5 | 6.3 |
| Beispiel 3 | 85.8 | 86.5 | 11.1 |

Wie man obiger Tabelle entnehmen kann, liegen die Transmissionswerte von Lacken, die die erfindungsgemäßen Mattierungsmittel aus Beispiel 2 oder 3 enthalten, sehr nahe an denen des reinen, unmattierten Lacks. Daher sind diese Lacke sehr klar und durchsichtig.
Ein Lack, welcher das gängige, weit verbreitete Mattierungsmittel ACEMATT OK 412 enthält, zeigt eine um mindestens 35 % schlechtere Transmission, was in einer starken Trübung des Lackes zum Ausdruck kommt.
Nachfolgende Abbildungen 1 und 2 zeigen SH-Lacke, enthaltend ein Mattierungsmittel gemäß Beispiel 2 oder 3, jeweils im Vergleich zum einem identischen SH-Lack enthaltend ACEMATT OK 412. Es wird sehr deutlich, dass Lacke, die die erfindungs-gemäßen Mattierungsmittel enthalten, wesentlich klarer sind.

**Patentansprüche**

1. Verwendung einer Fällungskieselsäure,
**dadurch gekennzeichnet,**
**daß** sie durch folgende physikalisch-chemischen Eigenschaften

| | |
|---|---|
| d50: | 1 - 50 μm |
| DBP: | 100 - 600 g/100g, |
| C-Gehalt: | 1-20%, |

aufweist
und
**daß** ihre Oberfläche durch Behandlung mit einem Polyorganosiloxan und/oder einem modifizierten Polyorganosiloxan und/oder einem Polyalkoxysiloxan dahingehend modifiziert wurde, dass die modifizierte Fällungskieselsäure die Transmission eines Klarlacks, mit einem Brechungsindex von $n_D20$ = 1.4492, enthaltend 5 Gew. % dieser modifizierten Fällungskieselsäure, im Vergleich zum identischen Klarlack enthaltend 5 Gew. % einer mit einem Polyethylenwachs behandelten Referenz-Fällungskieselsäure, um mindestens 20 % verbessert,
um die Transmission eines Lackes zu verbessern.

2. Verwendung nach Anspruch 1,
**dadurch gekennzeichnet,**
**daß** die Transmission eines Lackes mit einem Brechungsindex von 1.4000 bis 1.5000 verbessert wird.

3. Verwendung nach Anspruch 1 oder 2,
**dadurch gekennzeichnet,**
**daß** die Transmission eines Klarlacks verbessert wird.

4. Verwendung nach einem der Ansprüche 1 bis 3,
**dadurch gekennzeichnet,**
**dass** die Fällungskieselsäure eine Searszahl $V_2$ < 25 ml/5 g aufweist.

5. Verwendung nach einem der Ansprüche 1 bis 4,
**dadurch gekennzeichnet,**
**dass** die Fällungskieselsäure eine Partikelverteilung d50 von 1 - 40 μm aufweist.

6. Verwendung nach einem der Ansprüche 1 bis 5,
**dadurch gekennzeichnet,**
**dass** die Fällungskieselsäure eine Ölabsorption DBP: 200 - 500 g/100gaufweist.

7. Verwendung nach einem der Ansprüche 1 bis 6,
**dadurch gekennzeichnet,**
**dass** der Kohlenstoffgehalt der Fällungskieselsäure 1 - 10% beträgt.

8. Verwendung nach einem der Ansprüche 1 bis 7,
**dadurch gekennzeichnet,**
**dass** die mit den Organopolysiloxanen und/oder modifizierten Organopolysiloxanen und/oder Polyalkoxysiloxanen modifizierte Fällungskieselsäure die Transmission eines Klarlacks, mit einem Brechungsindex von $n_D20$ = 1.4492, enthaltend 5 Gew. % dieser modifizierten Fällungskieselsäure, im Vergleich zu einem identischen Lack enthaltend 5 Gew. % einer mit einem Polyethylenwachs behandelten Referenz-Fällungskieselsäure, um mindestens 25 % verbessert.

9. Verwendung nach einem der Ansprüche 1 bis 8,
**dadurch gekennzeichnet,**
**dass** die mit den Organopolysiloxanen und/oder den modifizierten Organopolysiloxanen und/oder Polyalkoxysiloxanen modifizierte Fällungskieselsäure die Transmission eines Klarlacks mit einem Brechungsindex von $n_D20$ = 1.4492, enthaltend 5 Gew. % dieser modifizierten Fällungskieselsäure, im Vergleich zu einem identischen Lack enthaltend 5 Gew. % einer mit einem Polyethylenwachs behandelten Referenz-Fällungskieselsäure, um mindestens

30 % verbessert.

**10.** Verwendung nach einem der Ansprüche 1 bis 9,
**dadurch gekennzeichnet,**
**dass** die mit den Organopolysiloxanen und/oder den modifizierten Organopolysiloxanen und/oder Polyalkoxysiloxanen modifizierte Fällungskieselsäure eine verbesserte Transmission im Bezug auf ACEMATT® OK 412 als Referenz-Fällungskieselsäure aufweist.

**11.** Verwendung nach einem der Ansprüche 1 bis 9,
**dadurch gekennzeichnet,**
**dass** die mit den Organopolysiloxanen und/oder den modifizierten Organopolysiloxanen und/oder Polyalkoxysiloxanen modifizierte Fällungskieselsäure eine verbesserte Transmission in Bezug auf eine Referenz-Fällungskieselsäure aufweist, wobei die Referenz-Fällungskieselsäure die gleiche unbehandelte Fällungskieselsäure, jedoch mit einem Polyethylenwachs beschichtet, ist.

**12.** Verwendung nach einem der Ansprüche 1 bis 11,
**dadurch gekennzeichnet,**
**dass** die Fällungskieselsäure mit einem Polyorganosiloxan mit folgender allgemeiner Struktur:

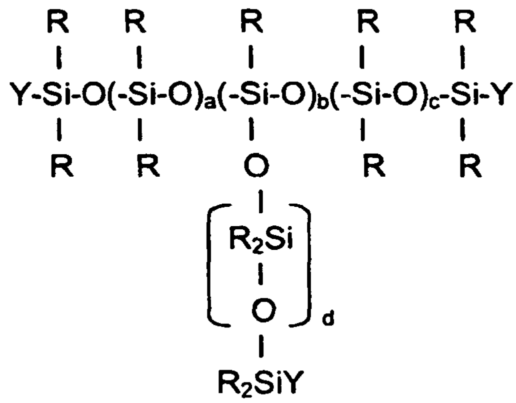

wobei

Y = -OH, -OR oder
Y = $H_5C_2$-O-$(C_2H_4O)_m$-, $H_7C_3$-O-$(C_3H_6O)_m$- oder

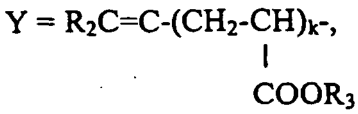

R = -Alkyl insbesondere Methyl oder Ethyl,
$R_2$ = Alkyl,
$R_3$ = Alkyl,
a = 0 - 100, b = 0 - 100, c = 0 - 100, d = 0 - 100,
m = 0 - 100 und k = 0 - 100 ist

modifiziert wurde.

**13.** Verwendung nach einem der Ansprüche 1 bis 11,
**dadurch gekennzeichnet,**
**dass** die Fällungskieselsäure mit einem Polyorganosiloxan mit folgender allgemeiner Struktur:

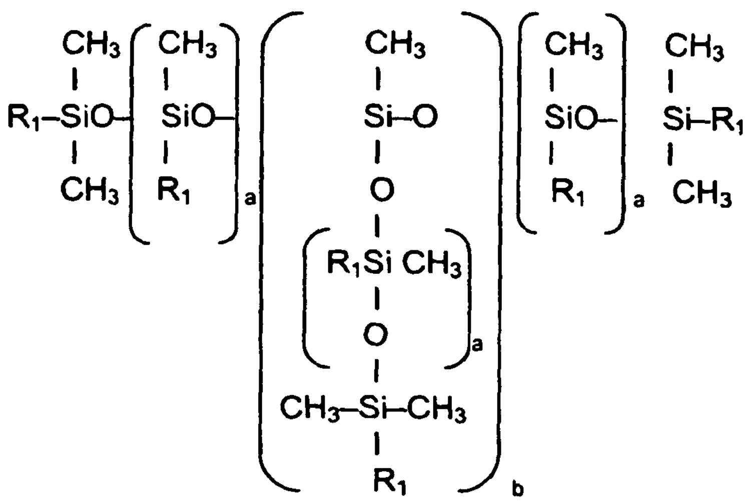

wobei

$R_1$ = ein Methylrest oder

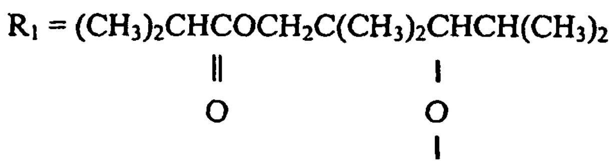

und / oder

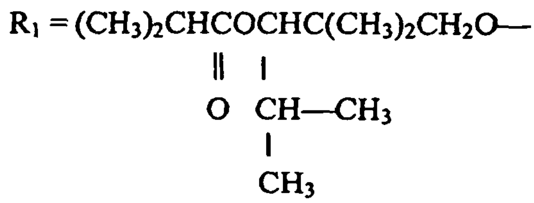

ist und die Summe der Einheiten a = 0 bis 100, die Summe der Einheiten b = 0 bis 15 ist, wobei bei den Resten $R_1$ das Verhältnis von Methyl zu Alkoxyresten kleiner 50 : 1 ist und b ≥ 1 ist, wenn a = 0 ist und a ≥ 5 ist, wenn b = 0 ist, modifiziert wurde.

**14.** Verfahren zur Herstellung von oberflächenmodifizierten, hydrophobierten Fällungskieselsäuren, durch

a) Ausfällen einer Alkalisilikatlösung mit einem Säuerungsmittel unter alkalischen bis schwach sauren Bedingungen,
b) weitere Zugabe eines Säuerungsmittels zur Einstellung eines pH-Werts von 7 bis 2 unter Erhalt einer Kieselsäurensuspension,
c) Abfiltrieren des ausgefällten Feststoffs und
d) Trocknung des Feststoffs mittels Langzeittrocknung, z.B. Drehrohrtrockner oder Tellertrockner, oder mittels Kurzzeittrocknung, z.B. Sprühtrockner, Spinflashtrockner so, dass das Produkt eine Restfeuchte von kleiner 10 % aufweist,

**dadurch gekennzeichnet,**

**dass** die gefällte Kieselsäure mit einem Polyorganosiloxan und/oder einem modifizierten Polyorganosiloxan und/oder einem Polyalkoxysiloxan behandelt wird, wobei die Menge und die Art des Polymers so gewählt wird,
**dass** die modifizierte Fällungskieselsäure die Transmission eines Klarlackes, mit einem Brechungsindex von $n_D20 = 1{,}4492$, enthaltend 5 Gew. % dieser modifizierten Fällungskieselsäure, im Vergleich zu einem identischen Lack enthaltend 5 Gew. % einer mit einem Polyethylenwachs behandelten Referenz-Fällungskieselsäure, um mindestens 20 % verbessert.

**15.** Verfahren gemäß Anspruch 14,
**dadurch gekennzeichnet,**
**dass** in die in Schritt b) auf pH 7 - 2 eingestellte Kieselsäuresuspension, in Schritt e) 0.5-30 Gew.-% des oberflächenmodifizierenden Polymeren zugegeben werden.

**16.** Verfahren nach Anspruch 14 oder 15,
**dadurch gekennzeichnet,**
**dass** die Zugabe in Schritt e) mit einer Dauer von 1 bis 30 Minuten unter Rühren durchgeführt wird.

**17.** Verfahren nach einem der Ansprüche 14 bis 16,
**dadurch gekennzeichnet,**
**dass** die Temperatur der Kieselsäuresuspension in Schritt e) 20 - 100 °C beträgt.

**18.** Verfahren gemäß Anspruch 17,
**dadurch gekennzeichnet,**
**dass** die gemäß Schritt c) abfiltrierte und gegebenenfalls mit deionisiertem Wasser gewaschene Kieselsäure mit Wasser oder Schwefelsäure oder einem Gemisch aus Wasser und Schwefelsäure resuspendiert und anschließend in Schritt e) 0.5 - 30 Gew. % des oberflächenmodifizierenden Polymers in die Suspension gegeben und die so erhaltene Suspension getrocknet, bevorzugt sprühgetrocknet wird.

**19.** Verfahren nach Anspruch 18,
**dadurch gekennzeichnet,**
**dass** die Trocknung nach Schritt e) so erfolgt, dass das Produkt eine Restfeuchte kleiner 10 % aufweist.

**20.** Verfahren nach Anspruch 18 oder 19,
**dadurch gekennzeichnet,**
**dass** die Temperatur der Kieselsäurensuspension in Schritt e) 20 - 100 °C beträgt.

**21.** Verfahren gemäß Anspruch 14,
**dadurch gekennzeichnet,**
**dass** die Kieselsäure nach Schritt d) in Schritt e) mit 0.5 - 30 Gew.-% eines oberflächenmodifizierenden Polymers versetzt und innig vermischt wird.

**22.** Verfahren nach Anspruch 21,
**dadurch gekennzeichnet,**
**dass** die Zugabe in Schritt e) mit einer Dauer von 0 bis 120 Minuten unter Mischen durchgeführt wird.

**23.** Verfahren nach Anspruch 22,
**dadurch gekennzeichnet,**
**dass** die Kieselsäure und das Polymer 0 - 2 h weiter gemischt werden.

**24.** Verfahren nach einem der Ansprüche 21 bis 23,
**dadurch gekennzeichnet,**
**dass** die Temperatur der Mischung in Schritt e) 20 - 150 °C beträgt.

**25.** Verfahren nach einem der Ansprüche 14 bis 24,
**dadurch gekennzeichnet,**
**dass** es sich bei dem Polyorganosiloxan um ein Polyorganosiloxan mit folgender allgemeiner Struktur handelt:

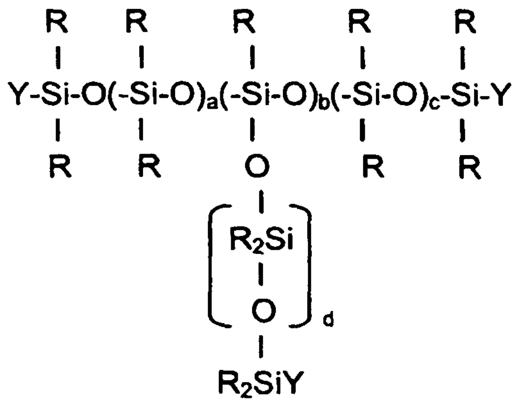

wobei

Y = -OH, -OR oder
Y = $H_5C_2$-O-$(C_2H_4O)_m$-, $H_7C_3$-O-$(C_3H_6O)_m$- oder

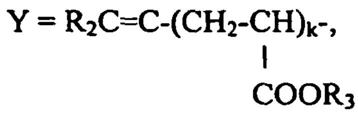

R = -Alkyl insbesondere Methyl oder Ethyl,
$R_2$ = Alkyl,
$R_3$ = Alkyl,
a = 0 - 100, b = 0 - 100, c = 0 - 100, d = 0 - 100,
m = 0 - 100 und k = 0 - 100 ist.

**26.** Verfahren nach einem der Ansprüche 14 bis 24,
**dadurch gekennzeichnet,**
**dass** es sich bei dem Polyorganosiloxan um ein Polyorganosiloxan mit folgender allgemeiner Struktur handelt:

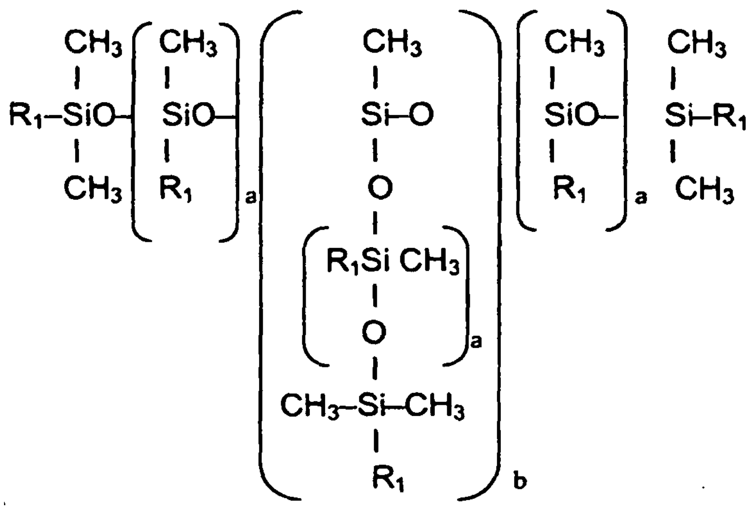

wobei

$R_1$ = ein Methylrest oder

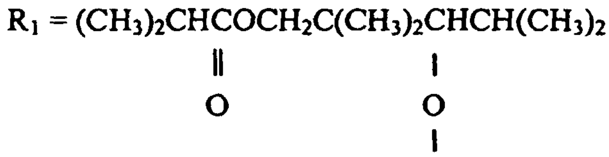

und / oder

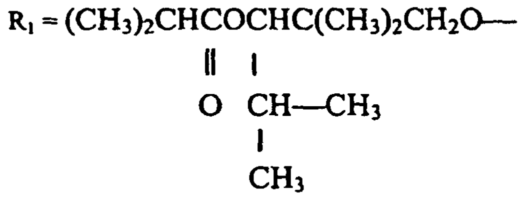

ist und die Summe der Einheiten a = 0 bis 100, die Summe der Einheiten b = 0 bis 15 ist, wobei bei den Resten $R_1$ das Verhältnis von Methyl zu Alkoxyresten kleiner 50 : 1 ist und $b \geq 1$ ist, wenn a = 0 ist und $a \geq 5$ ist, wenn b = 0 ist.

**27.** Verfahren nach einem der Ansprüche 14 bis 26,
**dadurch gekennzeichnet,**
**dass** nach der Trocknung der oberflächenmodifizierten Kieselsäure in Schritt f) eine Vermahlung durchgeführt wird.

**28.** Verfahren nach einem der Ansprüche 14 bis 26,
**dadurch gekennzeichnet,**
**dass** nach der Trocknung der oberflächenmodifizierten Kieselsäure oder nach oder während der Vermahlung in Schritt f) Partikel mit einem Durchmesser über 50 µm abgetrennt werden.

**29.** Lack enthaltend eine Fällungskieselsäure,
**dadurch gekennzeichnet,**
**daß** die Fällungskieselsäure folgende physikalisch-chemischen Eigenschaften

| | |
|---|---|
| d50: | 1 - 50 µm |
| DBP: | 100 - 600 g/100g, |
| C-Gehalt: | 1 - 20 %, |

aufweist
und
**daß** ihre Oberfläche durch Behandlung mit einem Polyorganosiloxan und/oder einem modifizierten Polyorganosiloxan und/oder Polyalkoxysiloxan dahingehend modifiziert wurde, daß die modifizierte Fällungskieselsäure die Transmission eines Klarlacks, mit einem Brechungsindex von $n_D20$ = 1.4492, enthaltend 5 Gew. % dieser modifizierten Fällungskieselsäure, im Vergleich zum identischen Klarlack enthaltend 5 Gew. % einer mit einem Polyethylenwachs behandelten Referenz-Fällungskieselsäure, um mindestens 20 % verbessert.

**30.** Lack nach Anspruch 29,
**dadurch gekennzeichnet,**
**daß** er einen Brechungsindex im Bereich von 1.4000 bis 1.5000 aufweist.

**31.** Lack nach einem der Ansprüche 29 oder 30,
**dadurch gekennzeichnet,**
**daß** es sich um einen Klarlack handelt.

## Claims

1. Use of a precipitated silica, which is **characterized by** the following physicochemical data:

| | |
|---|---|
| d50: | 1-50 μm |
| DBP: | 100-600 g/100 g |
| C content: | 1-20%, |

and whose surface has been treated with a polyorganosiloxane and/or a modified polyorganosiloxane and/or a polyalkoxysiloxane such that the modified precipitated silica improves by at least 20% the transmission of a clear coating material having a refractive index of $n_D20$ = 1.4492 containing 5% by weight of this modified precipitated silica in comparison to the identical clear coating material containing 5% by weight of a reference precipitated silica treated with a polyethylene wax,
to improve the transmission of a coating material.

2. Use according to Claim 1, **characterized in that** the transmission of a coating material having a refractive index of from 1.4000 to 1.5000 is improved.

3. Use according to Claim 1 or 2, **characterized in that** the transmission of a clear coating material is improved.

4. Use according to one of Claims 1 to 3, **characterized in that** the precipitated silica has a Sears number $V_2$ < 25 ml/5 g.

5. Use according to one of Claims 1 to 4, **characterized in that** the precipitated silica has a particle distribution d50 of 1-40 μm.

6. Use according to one of Claims 1 to 5, **characterized in that** the precipitated silica has an oil absorption DBP of 200-500 g/100 g.

7. Use according to one of Claims 1 to 6, **characterized in that** the carbon content of the precipitated silica is 1-10%.

8. Use according to one of Claims 1 to 7, **characterized in that** the precipitated silica modified with the organopolysiloxanes and/or modified organopolysiloxanes and/or polyalkoxysiloxanes improves by at least 25% the transmission of a clear coating material having a refractive index of $n_D20$ =1.4492 containing 5% by weight of this modified precipitated silica in comparison to an identical coating material containing 5% by weight of a reference precipitated silica treated with a polyethylene wax.

9. Use according to one of Claims 1 to 8, **characterized in that** the precipitated silica modified with the organopolysiloxanes and/or modified organopolysiloxanes and/or polyalkoxysiloxanes improves by at least 30% the transmission of a clear coating material having a refractive index of $n_D20$ =1.4492 containing 5% by weight of this modified precipitated silica in comparison to an identical coating material containing 5% by weight of a reference precipitated silica treated with a polyethylene wax.

10. Use according to one of Claims 1 to 9, **characterized in that** the precipitated silica modified with the organopolysiloxanes and/or modified organopolysiloxanes and/or polyalkoxysiloxanes has improved transmission in relation to ACEMATT® OK 412 as reference precipitated silica.

11. Use according to one of Claims 1 to 9, **characterized in that** the precipitated silica modified with the organopolysiloxanes and/or modified organopolysiloxanes and/or polyalkoxysiloxanes has improved transmission in relation to a reference precipitated silica which is the same untreated precipitated silica but coated with a polyethylene wax.

12. Use according to one of Claims 1 to 11, **characterized in that** the precipitated silica has been modified with a polyorganosiloxane having the following general structure:

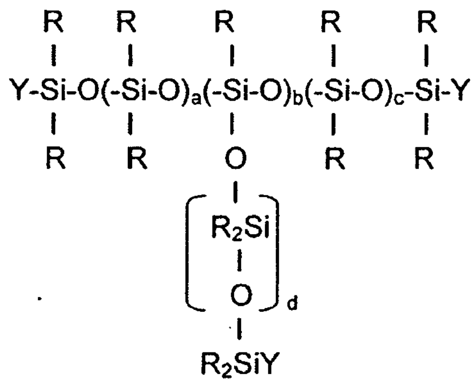

where

Y = -OH, -OR or
Y = $H_5C_2$-O-$(C_2H_4O)_m$-, $H_7C_3$-O-$(C_3H_6O)_m$- or

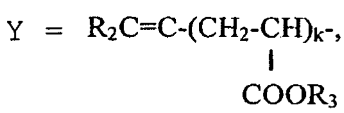

R = alkyl, in particular methyl or ethyl,
$R_2$ = alkyl,
$R_3$ = alkyl,
a = 0-100, b = 0-100, c = 0-100, d = 0-100,
m = 0-100 and k = 0-100.

**13.** Use according to one of Claims 1 to 11, **characterized in that** the precipitated silica has been modified with a polyorganosiloxane having the following general structure:

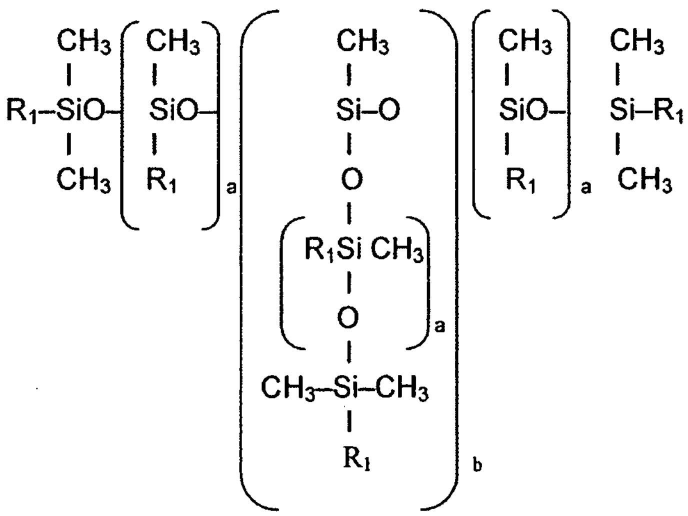

where

$R_1$ is a methyl radical or

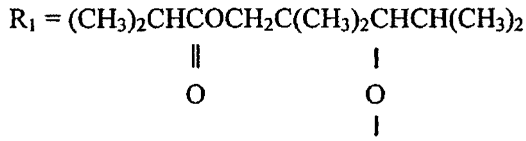

and/or

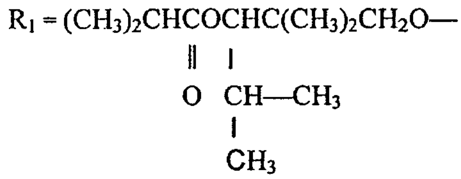

and the sum of the units a = 0 to 100, the sum of the units b = 0 to 15, the ratio of methyl to alkoxy radicals for the radicals $R_1$ being less than 50:1 and b being ≥ 1 if a = 0, and a ≥ 5 if b = 0.

**14.** Process for preparing surface-modified, hydrophobicized precipitated silicas by

a) precipitating an alkali metal silicate solution with an acidifier under weakly acidic to alkaline conditions,
b) further adding an acidifier to set a pH of from 7 to 2, to give a silica suspension,
c) isolating the precipitated solid by filtration, and
d) drying the solid by means of slow drying, e.g., rotary tube dryers or plate dryers, or by means of rapid drying, e.g., spray dryers, spin flash dryers, such that the product has a residual moisture content of less than 10%,

**characterized in that** the precipitated silica is treated with a polyorganosiloxane and/or a modified polyorganosiloxane and/or a polyalkoxysiloxane, the amount and the nature of the polymer being chosen such that the modified precipitated silica improves by at least 20% the transmission of a clear coating material having a refractive index of $n_D20$ = 1.4492 containing 5% by weight of this modified precipitated silica in comparison to an identical coating material containing 5% by weight of a reference precipitated silica treated with a polyethylene wax.

**15.** Process according to Claim 14, **characterized in that** in step e) 0.5-30% by weight of a surface modifying polymer is added to the silica suspension adjusted in step b) to a pH of 7-2.

**16.** Process according to Claim 14 or 15, **characterized in that** the addition in step e) is carried out with a duration of from 1 to 30 minutes and with stirring.

**17.** Process according to one of Claims 14 to 16, **characterized in that** the temperature of the silica suspension in step e) is 20-100°C.

**18.** Process according to Claim 17, **characterized in that** the silica isolated by filtration in accordance with step c) and optionally washed with deionized water is resuspended with water or sulfuric acid or with a mixture of water and sulfuric acid and subsequently in step e) 0.5-30% by weight of the surface-modifying polymer is added to the suspension and the resulting suspension is dried, preferably spray-dried.

**19.** Process according to Claim 18, **characterized in that** the drying after step e) takes place such that the product has a residual moisture content of less than 10%.

**20.** Process according to Claim 18 or 19, **characterized in that** the temperature of the silica suspension in step e) is 20-100°C.

**21.** Process according to Claim 14, **characterized in that** after step d) 0.5-30% by weight of a surface-modifying polymer is added in step e) to the silica and the two are intimately mixed.

**22.** Process according to Claim 21, **characterized in that** the addition in step e) is carried out with a duration of from

0 to 120 minutes and with mixing.

23. Process according to Claim 22, **characterized in that** the silica and the polymer are mixed for 0-2 h more.

24. Process according to one of Claims 21 to 23,
**characterized in that** the temperature of the mixture in step e) is 20-150°C.

25. Process according to one of Claims 14 to 24, **characterized in that** the polyorganosiloxane is a polyorganosiloxane having the following general structure:

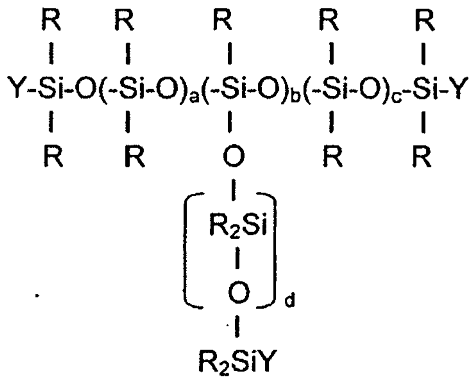

where

Y = -OH, -OR or
Y = $H_5C_2$-O-$(C_2H_4O)_m$-, $H_7C_3$-O-$(C_3H_6O)_m$- or

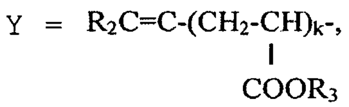

R = alkyl, in particular methyl or ethyl,
$R_2$ = alkyl,
$R_3$ = alkyl,
a = 0-100, b = 0-100, c = 0-100, d = 0-100,
m = 0-100 and k = 0-100.

26. Process according to one of Claims 14 to 24, **characterized in that** the polyorganosiloxane is a polyorganosiloxane having the following general structure:

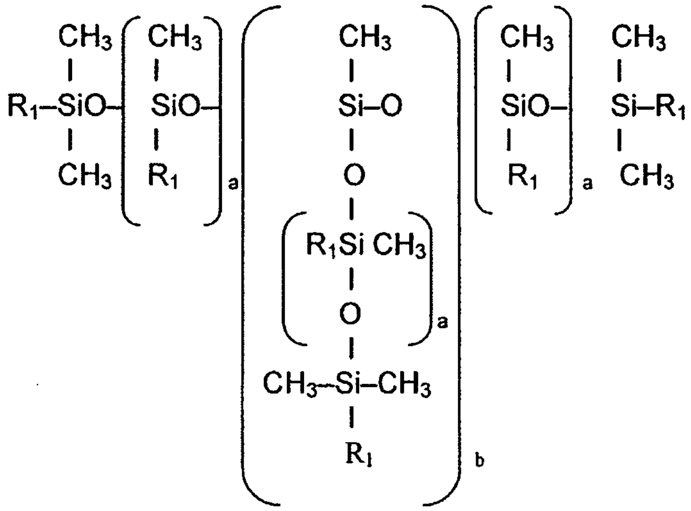

where

$R_1$ is a methyl radical or

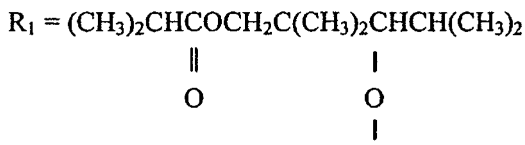

and/or

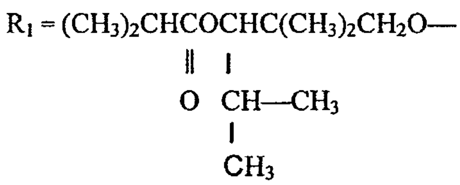

and the sum of the units a = 0 to 100, the sum of the units b = 0 to 15, the ratio of methyl to alkoxy radicals for the radicals $R_1$ being less than 50:1 and b being ≥ 1 if a = 0, and a ≥ 5 if b = 0.

**27.** Process according to one of Claims 14 to 26, **characterized in that** after the surface-modified silica has been dried in step f) grinding is carried out.

**28.** Process according to one of Claims 14 to 26, **characterized in that** after the surface-modified silica has been dried or after or during the grinding in step f) particles having a diameter of more than 50 μm are separated off.

**29.** Coating material comprising a precipitated silica, which is **characterized by** the following physicochemical data:

| | |
|---|---|
| d50: | 1-50 μm |
| DBP: | 100-600 g/100 g |
| C content: | 1-20%, |

and whose surface has been treated with a polyorganosiloxane and/or a modified polyorganosiloxane and/or a polyalkoxysiloxane such that the modified precipitated silica improves by at least 20% the transmission of a clear

coating material having a refractive index of $n_D20$ = 1.4492 containing 5% by weight of this modified precipitated silica in comparison to the identical clear coating material containing 5% by weight of a reference precipitated silica treated with a polyethylene wax.

**30.** Coating material according to Claim 29, **characterized in that** it has a refractive index in the range from 1.4000 to 1.5000.

**31.** Coating material according to Claim 29 or 30,
**characterized in that** it is a clear coating material.

## Revendications

**1.** Utilisation d'une silice précipitée, **caractérisée en ce qu'**elle présente les propriétés physicochimiques suivantes :

| | |
|---|---|
| d50 : | 1-50 μm |
| DBP : | 100-600 g/100 g |
| Teneur en C : | 1-20 %, |

et **en ce que** sa surface a été modifiée, par traitement avec un polyorganosiloxane et/ou un polyorganosiloxane modifié et/ou un polyalcoxysilane au point que la silice modifiée améliore d'au moins 20 % la transmission d'un vernis transparent ayant un indice de réfraction $n_D20$ de 1,4492, contenant 5 % en poids de cette silice précipitée modifiée, par comparaison avec un vernis transparent identique, contenant 5 % en poids d'une silice précipitée de référence traitée par une cire de polyéthylène,
pour améliorer la transmission d'un vernis.

**2.** Utilisation selon la revendication 1, **caractérisée en ce que** l'on améliore la transmission d'un vernis ayant un indice de réfraction de 1,4000 à 1,5000.

**3.** Utilisation selon la revendication 1 ou 2, **caractérisée en ce qu'**on améliore la transmission d'un vernis transparent.

**4.** Utilisation selon l'une des revendications 1 à 3, **caractérisée en ce que** la silice précipitée présente un indice de Sears $V_2$ < 25 ml/5 g.

**5.** Utilisation selon l'une des revendications 1 à 4, **caractérisée en ce que** la silice précipitée présente une distribution granulométrique d50 de 1 à 40 μm.

**6.** Utilisation selon l'une des revendications 1 à 5, **caractérisée en ce que** la silice précipitée présente une absorption d'huile DBP de 200 à 500 g/100 g.

**7.** Utilisation selon l'une des revendications 1 à 6, **caractérisée en ce que** la teneur en carbone de la silice précipitée est de 1 à 10 %.

**8.** Utilisation selon l'une des revendications 1 à 7, **caractérisée en ce que** la silice précipitée modifiée par les organopolysiloxanes et/ou les organopolysiloxanes modifiés et/ou les polyalcoxysilanes améliore d'au moins 25 % la transmission d'un vernis transparent ayant un indice de réfraction $n_D^{20}$ de 1,4492, contenant 5 % en poids de cette silice modifiée, par comparaison avec un vernis identique contenant 5 % en poids d'une silice précipitée de référence traitée par une cire de polyéthylène.

**9.** Utilisation selon l'une des revendications 1 à 8, **caractérisée en ce que** la silice précipitée modifiée par les organopolysiloxanes et/ou les organopolysiloxanes modifiés et/ou les polyalcoxysilanes améliore d'au moins 30 % la transmission d'un vernis transparent ayant un indice de réfraction $n_D^{20}$ de 1,4492, contenant 5 % en poids de cette silice modifiée, par comparaison avec un vernis identique contenant 5 % en poids d'une silice précipitée de référence traitée par une cire de polyéthylène.

**10.** Utilisation selon l'une des revendications 1 à 9, **caractérisée en ce que** la silice précipitée modifiée par les organopolysiloxanes et/ou les organopolysiloxanes modifiés et/ou les polyalcoxysilanes présente une transmission améliorée par rapport avec l'ACEMATT® OK 412 servant de silice précipitée de référence.

**11.** Utilisation selon l'une des revendications 1 à 9, **caractérisée en ce que** la silice précipitée modifiée par les organopolysiloxanes et/ou les organopolysiloxanes modifiés et/ou les polyalcoxysiloxanes présente une transmission améliorée, par rapport à une silice précipitée de référence, la silice précipitée de référence étant la même silice précipitée, non traitée, mais revêtue d'une cire de polyéthylène.

**12.** Utilisation selon l'une des revendications 1 à 11, **caractérisée en ce que** la silice précipitée a été modifiée par un polyorganosiloxane ayant la formule générale suivante :

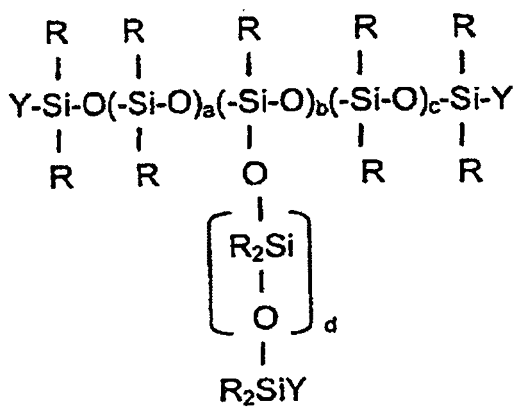

dans laquelle

Y est -OH, -OR ou
Y est $H_5C_2$-O-$(C_2H_4O)_m$-, $H_7C_3$-O-$(C_3H_6O)_m$- ou

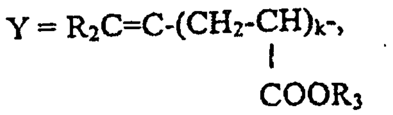

R est un radical alkyle, en particulier méthyle ou éthyle,
$R_2$ est un radical alkyle,
$R_3$ est un radical alkyle,
a vaut 0 à 100, b vaut 0 à 100, c vaut 0 à 100, d vaut 0 à 100,
m vaut 0 à 100 et k vaut 0 à 100.

**13.** Utilisation selon l'une des revendications 1 à 11, **caractérisée en ce que** la silice précipitée a été modifiée par un polyorganosiloxane ayant la structure générale suivante :

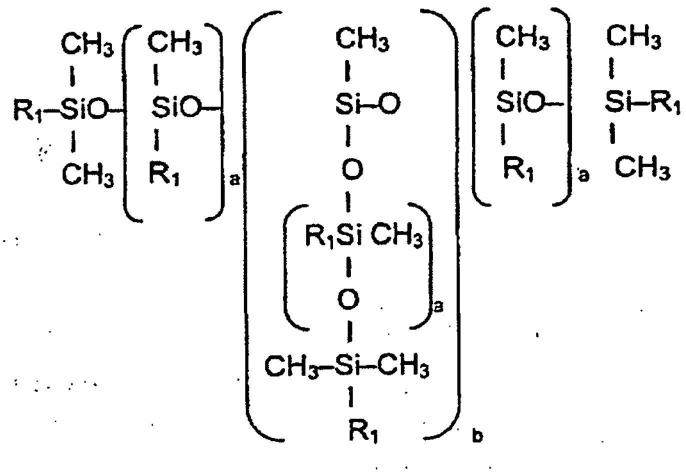

dans laquelle

$R_1$ est un radical méthyle ou

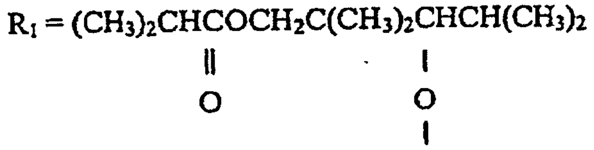

et/ou

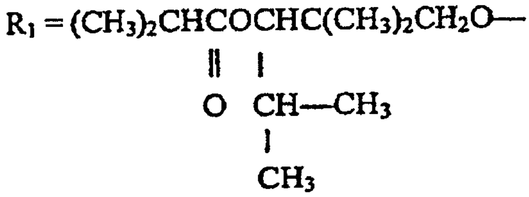

et la somme des indices a est de 0 à 100, la somme des indices b est de 0 à 15, et, dans les radicaux $R_1$, le rapport entre les groupes méthyle et les groupes alcoxy est inférieur à 50:1, et b ≥ 1 quand a = 0, et a ≥ 5 quand b = 0.

**14.** Procédé de préparation de silices précipitées hydrophobisées modifiées en surface, par

a) précipitation d'une solution d'un silicate d'un métal alcalin, à l'aide d'un agent d'acidification dans des conditions alcalines à faiblement acides,
b) addition supplémentaire d'un agent d'acidification pour ajuster le pH à une valeur de 7 à 2, avec obtention d'une suspension de silice,
c) isolement par filtration du solide qui a précipité, et
d) séchage de la matière solide par un séchage de longue durée, par exemple à l'aide d'un séchoir tubulaire rotatif ou d'un séchoir à plateaux, ou par un séchage de courte durée, par exemple un séchoir par atomisation, un séchoir éclair de type Spinflash, de façon que le produit présente une humidité résiduelle inférieure à 10 %,

**caractérisé en ce que** la silice précipitée est traitée avec un polyorganosiloxane et/ou un polyorganosiloxane modifié et/ou un polyorganosiloxane, la quantité et la nature du polymère étant choisies de façon que la silice précipitée modifiée améliore d'au moins 20 % la transmission d'un vernis transparent ayant un indice de réfraction $n_D^{20}$ de 1,4492, contenant 5 % en poids de cette silice précipitée modifiée, par comparaison avec un vernis identique

contenant 5 % en poids d'une silice précipitée de référence traitée par une cire de polyéthylène.

**15.** Procédé selon la revendication 14, **caractérisé en ce qu'**on ajoute dans une étape e) à la suspension de silice ajustée à pH 7-2 dans l'étape b), 0,5 à 30 % en poids d'un polymère modifiant en surface.

**16.** Procédé selon la revendication 14 ou 15, **caractérisé en ce que** l'addition de l'étape e) est mise en oeuvre sous agitation, pendant 1 à 30 minutes.

**17.** Procédé selon l'une des revendications 14 à 16, **caractérisé en ce que** la température de la suspension de silice de l'étape e) est de 20 à 100°C.

**18.** Procédé selon la revendication 17, **caractérisé en ce que** la silice isolée par filtration dans l'étape c) et éventuellement lavée avec de l'eau désionisée est remise en suspension dans de l'eau ou de l'acide sulfurique ou dans un mélange d'eau et d'acide sulfurique, puis, dans l'étape e), on ajoute à la suspension 0,5 à 30 % en poids du polymère modifié en surface, la suspension ainsi obtenue étant soumise à un séchage, de préférence à un séchage par atomisation.

**19.** Procédé selon la revendication 18, **caractérisé en ce que** le séchage de l'étape e) est réalisé de façon que le produit présente une humidité résiduelle inférieure à 10 %.

**20.** Procédé selon la revendication 18 ou 19, **caractérisé en ce que** la température de la suspension de silice dans l'étape e) est de 20 à 100°C.

**21.** Procédé selon la revendication 14, **caractérisé en ce que** la silice, après l'étape d), est dans l'étape e) additionnée de 0,5 à 30 % en poids d'un polymère modifié en surface et est soumise à un mélange intime.

**22.** Procédé selon la revendication 21, **caractérisé en ce que** l'addition de l'étape e) est mise en oeuvre tout en mélangeant, pendant 0 à 120 minutes.

**23.** Procédé selon la revendication 22, **caractérisé en ce que** la silice et le polymère sont encore mélangés pendant 0 à 2 h.

**24.** Procédé selon l'une des revendications 21 à 23, **caractérisé en ce que** la température du mélange dans l'étape e) est de 20 à 150°C.

**25.** Procédé selon l'une des revendications 14 à 24,
**caractérisé en ce que**, pour ce qui concerne le polyorganosiloxane, il s'agit d'un polyorganosiloxane ayant la structure générale suivante :

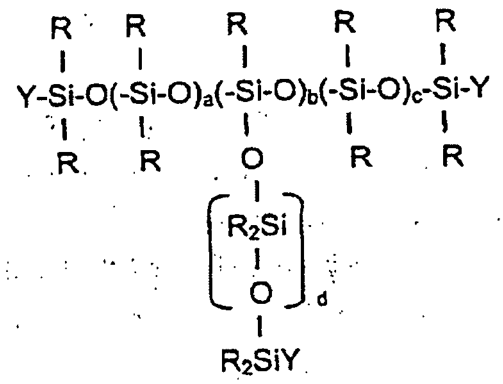

dans laquelle

Y est -OH, -OR ou
Y est $H_5C_2$-O- $(C_2H_4O)_m$-, $H_7C_3$-O- $(C_3H_6O)_m$- ou

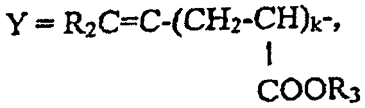

R est un radical alkyle, en particulier méthyle ou éthyle,
$R_2$ est un radical alkyle,
$R_3$ est un radical alkyle,
a vaut 0 à 100, b vaut 0 à 100, c vaut 0 à 100, d vaut 0 à 100,
m vaut 0 à 100 et k vaut 0 à 100.

**26.** Procédé selon l'une des revendications 14 à 24, **caractérisé en ce que**, pour ce qui concerne le polyorganosiloxane, il s'agit d'un polyorganosiloxane ayant la structure générale suivante :

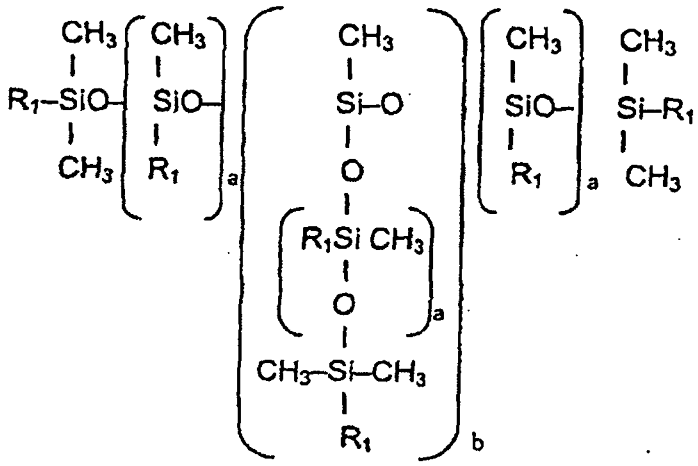

dans laquelle

$R_1$ est un radical méthyle ou

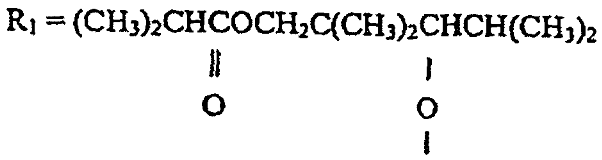

et/ou

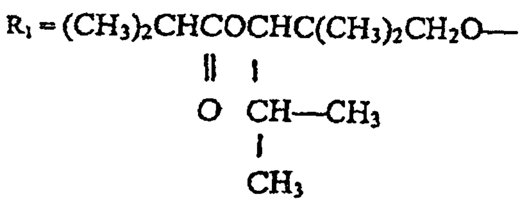

et la somme des indices a est de 0 à 100, la somme des indices b est de 0 à 15, et, dans les radicaux $R_1$, le rapport enter les groupes méthyle et les groupes alcoxy est inférieur à 50:1, et b ≥ 1 quand a = 0, et a ≥ 5 quand b = 0.

**27.** Procédé selon l'une des revendications 14 à 26, **caractérisé en ce que**, après le séchage de la silice modifiée en surface dans l'étape f), on procède à un broyage.

**28.** Procédé selon l'une des revendications 14 à 26, **caractérisé en ce que**, après le séchage de la silice modifiée en surface ou après ou pendant le broyage de l'étape f), on sépare des particules ayant un diamètre supérieur à 50 µm.

**29.** Vernis contenant une silice précipitée, **caractérisée en ce que** la silice précipitée présente les propriétés physicochimiques suivantes :

| | |
|---|---|
| d50 : | 1-50 µm |
| DBP : | 100-600 g/100 g |
| Teneur en C : | 1-20 %, |

et **en ce que** sa surface a été modifiée, par traitement avec un polyorganosiloxane et/ou un polyorganosiloxane modifié et/ou un polyalcoxysilane au point que la silice modifiée améliore d'au moins 20 % la transmission d'un vernis transparent ayant un indice de réfraction $n_D^{20}$ de 1,4492, contenant 5 % en poids de cette silice précipitée modifiée, par comparaison avec un vernis transparent identique, contenant 5 % en poids d'une silice précipitée de référence traitée par une cire de polyéthylène.

**30.** Vernis selon la revendication 29, **caractérisé en ce qu'**il présente un indice de réfraction compris dans la plage de 1,4000 à 1,5000.

**31.** Vernis selon l'une des revendications 29 ou 30, **caractérisé en ce qu'**il s'agit d'un vernis transparent.

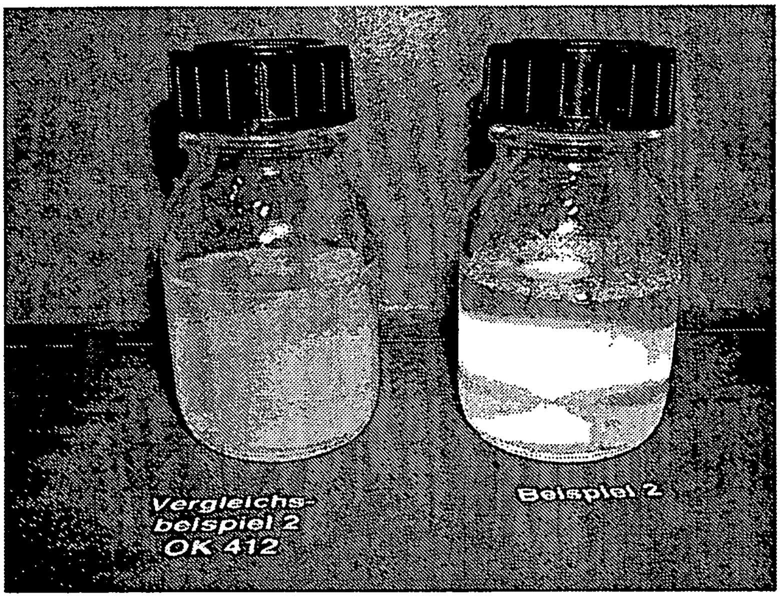


Abbildung 1: Vergleich der Trübungen eines SH-Lacks enthaltend ACEMATT OK 412 mit einem SH-Lack enthaltend ein Mattierungsmittel gemäß Beispiel 2

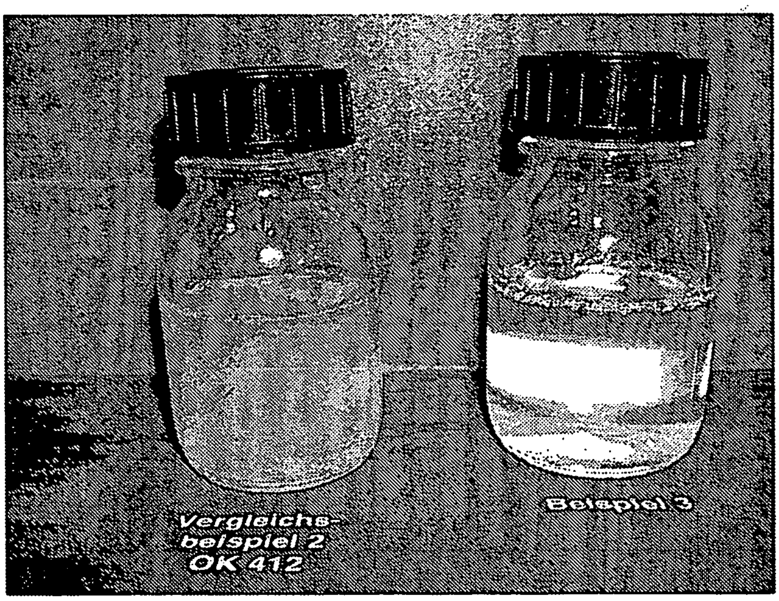


Abbildung 2: Vergleich der Trübungen eines SH-Lacks enthaltend ACEMATT OK 412 mit einem SH-Lack enthaltend ein Mattierungsmittel gemäß Beispiel 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0922671 A
- DE 2513608
- EP 0341383 A
- DE 2435860
- DE 3627782 A1
- DE 3144299
- DE 1767332